# EUROPÄISCHE PATENTSCHRIFT

(11) **EP 0 688 690 B1**
(45) Veröffentlichungstag und Bekanntmachung des Hinweises auf die Patenterteilung: **14.05.1997**
(21) Anmeldenummer: 95109007.5
(22) Anmeldetag: 12.06.1995
(51) Int. Cl.: B60J 5/04

(54) **Metallisches Profil als Verstärkung einer Kraftfahrzeugtür**
Profile made of metal for reinforcement of a vehicle door
Profilé en métal pour le renforcement d'une porte de véhicule

(30) Priorität: 23.06.1994 DE 4421934
(43) Veröffentlichungstag der Anmeldung: 27.12.1995
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Ufrecht, Martin, D-50668 Köln (DE)
(74) Vertreter: Messulam, Alec Moses

(56) Entgegenhaltungen:
- DE-A- 4 307 079
- DE-U- 9 215 425
- GB-A- 1 287 160
- US-A- 4 948 196
- PATENT ABSTRACTS OF JAPAN vol. 010 no. 360 (M-541) ,3.Dezember 1986 & JP-A-61 157427 (HASHIMOTO FORMING CO LTD) 17.Juli 1986,

## Beschreibung

Die Erfindung bezieht sich auf ein metallisches Profil als Verstärkung einer Kraftfahrzeugtür, der im Oberbegriff des Patentanspruches 1 erläuterten Art.

Aus dem DE-GM 92 13 150 ist ein Aufprallträger aus Stahl bekannt, der durch Warmwalzen aus einem endlosen Ausgangsmaterial in Form eines kastenartigen Profiles hergestellt wird und der an seinen Enden durch schräges Ablängen durch Trennschneiden oder Laserstrahlschneiden mit einer ebenflächigen Anlage und einem offenen Querschnitt versehen ist.

Der bekannte Aufprallträger weist den Nachteil auf, daß sein durch Warmwalzen hergestelltes Profil keine Korrosionsbehandlung der Innenseite des Hohlträgers aufweist, so daß vorher in einem gesonderten Arbeitsgang oder später bei im Fahrzeug eingebautem Aufprallträger entsprechende Maßnahmen zum Korrosionsschutz ergriffen werden müssen.

Aus dem DE-GM 92 08 957 ist ein Hohlprofil für die Verstärkung einer Kraftfahrzeugtür bekannt, das wieder durch Warmwalzen aus einem endlosen Ausgangsmaterial hergestellt wird und bei dem verschiedene Profilgestaltungen als Hohlprofile aufgezeigt werden. Über die Ausgestaltung der Enden des Verstärkungsträgers und über dessen Korrosionsschutz ist nichts ausgesagt.

Aus der DE-PS 40 31 683 ist ein metallisches Hohlprofil als Türverstärkungselement in Kraftfahrzeugen bekannt, das von einem endlosen Ausgangsmaterial in Form eines Rohres ausgeht und dessen Enden mit ebenflächigen Anlagen durch Aufklappen des Rohres versehen sind.

Über die Möglichkeiten, ein solches enges Rohr mit einem Korrosionsschutz zu versehen, wird nichts ausgesagt.

Aus der DE-PS 36 06 024 ist eine Fahrzeugtür mit Aufprallprofil bekannt, wobei von einem endlos durch Strangpressen hergestellen Aluminium-Hohlprofil ausgegangen wird, dessen Enden wieder durch schräges Ablängen durch Trennschneiden oder dergleichen mit einer ebenflächigen Anlage und einem offenen Querschnitt versehen sind.

Bei diesem bekannten Hohlprofil erübrigt sich durch das Material der ansonsten schwierig zu verwirklichende Korrosionsschutz.

Das Ziel der Erfindung ist es, ein metallisches Profil als Verstärkung einer Kraftfahrzeugtüre, der im Oberbegriff des Patentanspruches 1 erläuterten Art in einem einfachen Verfahren herzustellen, das die verschiedensten Profilgestaltungen ermöglicht und bei dem unmittelbar und ohne Nachbehandlung ein ausreichender Innenkorrosionsschutz erreicht wird.

Gemäß der Erfindung wird dieses Ziel erreicht, indem ein metallisches Profil als Verstärkung einer Kraftfahrzeugtür, der im Oberbegriff des Patentanspruches 1 erläuterten Art in der im Kennzeichen des Patentanspruches 1 aufgezeigten Weise hergestellt wird.

Dadurch, daß das metallische Profil durch Kaltwalzen von zumindest einseitig korrosionsbeschichtetem Stahlblech hergestellt und es durch schräges Ablängen auf die Einbaulänge gebracht wird, wird eine einfache Herstellung und eine einfache Montage unter Vermeidung zusätzlicher Verarbeitungsschritte bereitgestellt.

In den Unteransprüchen sind weitere zweckmäßige Ausführungsformen der Erfindung näher erläutert.

Die Erfindung wird anhand zweier in den Zeichnungen gezeigte Ausführungsbeispiele näher erläutert. Es zeigt:
- Fig. 1: einen horizontalen Teilschnitt durch eine Kraftfahrzeugtür im Bereich der Befestigung der Verstärkung;
- Fig. 2: einen Schnitt entlang der Linie II-II in Fig. 1;
- Fig. 3: eine Ansicht in Richtung des Pfeiles III in Fig. 1;
- Fig. 4: einen horizontalen Teilschnitt durch eine Kraftfahrzeugtür im Bereich der Verstärkung;
- Fig. 5: einen Schnitt entlang der Linie V-V und
- Fig. 6: eine Ansicht in Richtung des Pfeiles VI in Fig. 4.

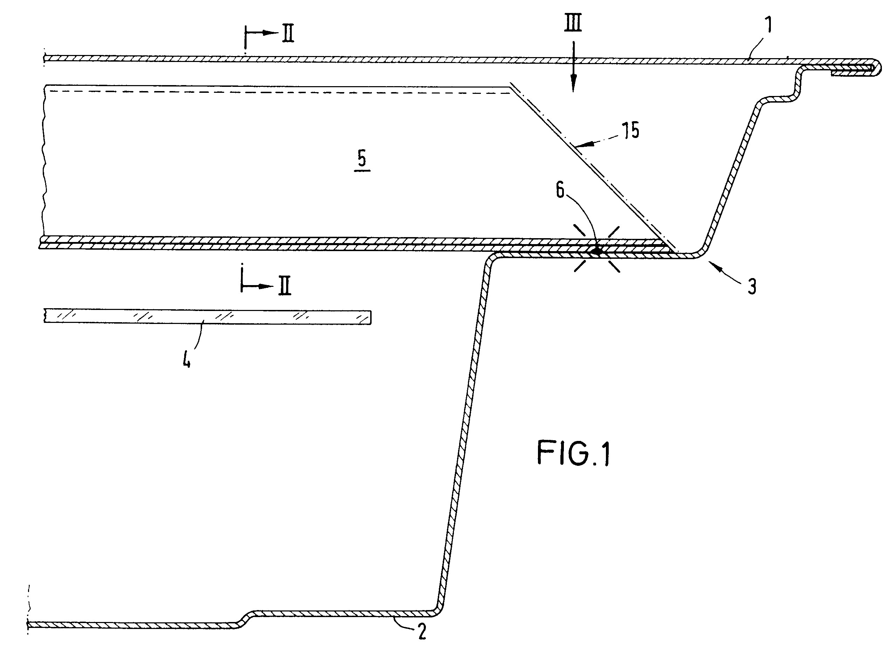

Bei der in den Figuren 1 bis 3 gezeigten Ausführungsformen besteht eine Kraftfahrzeugtür im wesentlichen aus einem Türaußenblech 1 und einem Türinnenblech 2. Ein Stufenbereich 3 außerhalb der Ebene der Fensterscheibe 4 ist zur Befestigung einer Verstärkung 5 mittels Punktschweißungen 6 oder sonstiger Befestigungsverfahren vorgesehen. Das Profil oder die Verstärkung 5 wird durch Kaltwalzen eines zumindest einseitig bei 7 korrosionsbeschichteten Stahlblech 8 hergestellt, wobei dieser Ausführungsform von einem ebenen Schenkel 9 des Profiles 5 ausgegangen wird, das bei 10 umgefaltet ist, so daß die am anderen Schenkel ausgebildeten Profilrinnen 11 und 12 mit dem ebenen Schenkel 9 ein Profil mit zwei trapezförmigen Kammern bildet, wobei die aneinanderliegenden Bereich bei 13 und 14 z.B. durch Punktschweißungen oder Laserstrahlschweißungen zweckmäßigerweise miteinander verbunden sind.

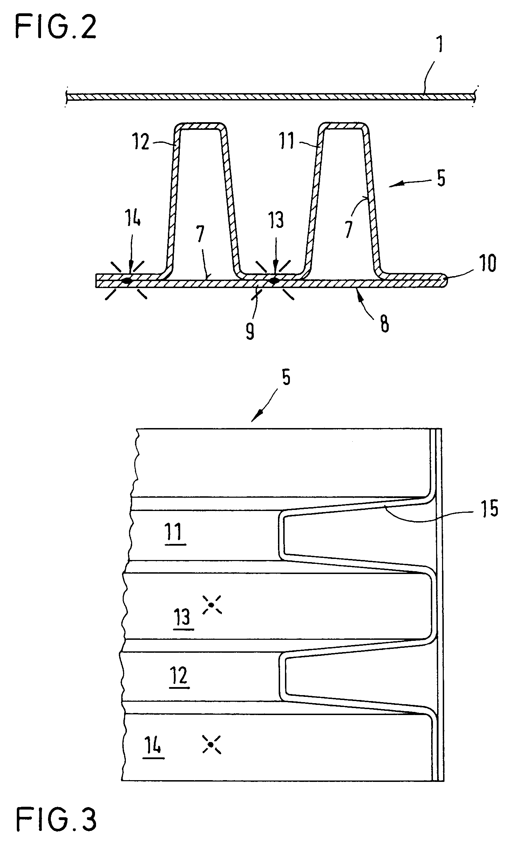

Wie sich aus den Figuren 1 und 3 ergibt, ist das Profil 5 durch ein schräges Ablängen durch Trennschneiden oder Laserstrahlschneiden in Form eines ebenen Schrägschnittes 15 (siehe Strich-Punkt-Linie!) so geöffnet, daß im Stufenbereich 3 eine einfache Befestigung z.B. mittels Punktschweißungen 6 mittels einer Punktschweißzange möglich ist.

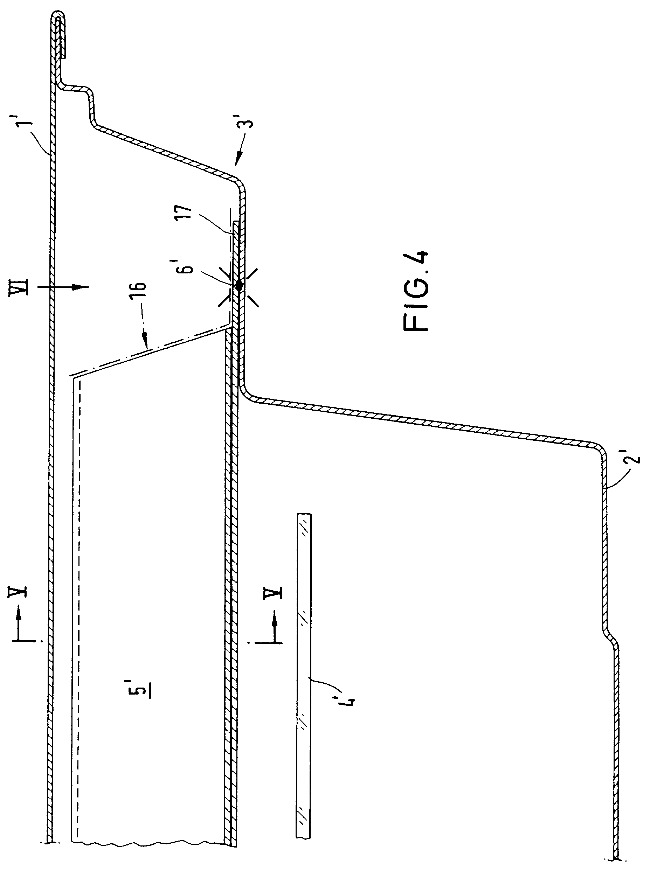

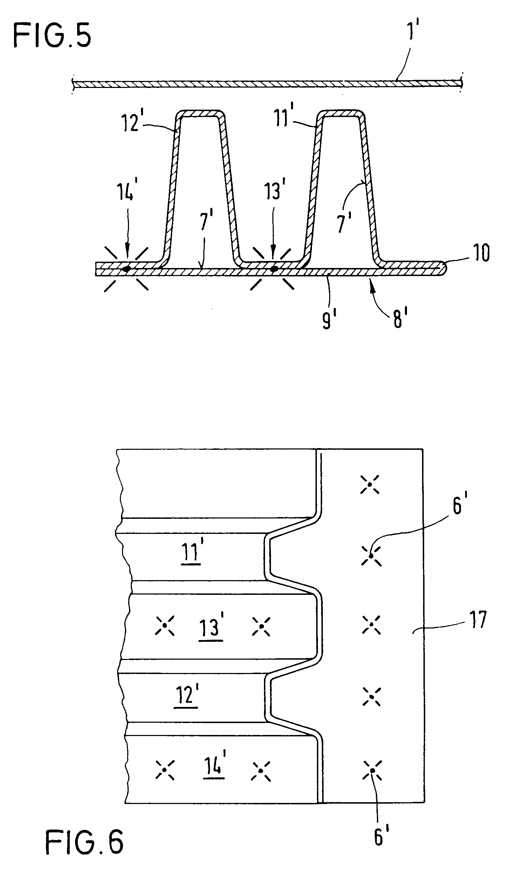

Bei dem in den Figuren 4 bis 6 gezeigten Ausführungsbeispiel sind im wesentlichen gleiche Teile mit dem gleichen, nur mit einem Strichindex versehenen Bezugszeichen bezeichnet.

Der Aufbau des Profil 5' entspricht im wesentlichen dem Aufbau des Profils in den Fig. 1 bis 3, der einzige Unterschied ergibt sich aus einer anderen Art der schrägen Ablängung durch Trennschneiden oder Laserstrahlschneiden und zwar durch einen winkelartigen Schrägschnitt 16 (siehe Strich-Punkt-Linie!), der dazu führt, daß der ebene Schenkel 9' in Form eines Lappens 17 stehen bleibt und die Verstärkung daher wieder in üblicher Weise durch Punktschweißpunkte 6' mittels einer herkömmlichen Punktschweißzange befestigt werden kann.

Selbstverständlich kann das Profil als Verstärkung einer Kraftfahrzeugtür sämtliche Profilformen aufweisen, wie sie bereits aus dem eingangs erwähnten Stand der Technik ersichtlich sind und darüber hinaus sind auch Profilformen denkbar, wo die Profilrinnen nicht einen offenen Querschnitt bilden sondern aneinandergefaltet sind und daher z.B. ein M- oder ein W-förmiges Profil, das nicht als Hohlprofil anzusprechen ist, bilden.

Durch die erfindungsgemäße Maßnahme, ein Profil als Verstärkung einer Kraftfahrzeugtür aus einem zumindest einseitig korrosionsbeschichteten Stahlblech durch Kaltwalzen herzustellen, werden zusätzliche Maßnahmen, die sonst üblicherweise bei engen Hohlprofilen für den Innenkorrosionsschutz erforderlich werden, vermieden.

Selbstverständlich kann anstelle eines einseitig korrosionsbeschichteten Stahlbleches auch ein doppelseitig beschichtetes Stahlblech verwendet werden und ebenso ist es im Rahmen der Erfindung möglich, Coil-Coated-Bleche oder Aluminiumbleche für die entsprechende Kaltwalzverformung zu verwenden.

## Patentansprüche

1. Metallisches Profil als Verstärkung einer Kraftfahrzeugtür, das mit beiden Enden an der Fahrzeugtür (bei 3) festlegbar ist, wobei mindestens ein Ende eine ebenflächige Anlage und einen offenen Querschnitt längs einer axial verlaufenden flachen Schräge (15 oder 16) aufweist und durch schräges Ablängen eines durch Formwalzen hergestellten endlosen Ausgangsmaterials auf die fertige Einbaulänge gebracht ist,
**dadurch gekennzeichnet**, daß
- es durch Kaltwalzen von zumindest einseitig korrosionsbeschichtetem Stahlblech (8) hergestellt und
- es durch schräges Ablängen durch Trennschneiden oder Laserstrahlschneiden durch einen ebenen oder einen winkelartigen Schrägschnitt (15 oder 16) auf die Einbaulänge gebracht wird.

2. Metallisches Profil nach Anspruch 1,
**dadurch gekennzeichnet**, daß
- das schräge Ablängen durch einen winkelartigen Schrägschnitt (16) erfolgt, wodurch eine Befestigungslasche (17) gebildet wird.

3. Metallisches Profil nach einem der Ansprüche 1 oder 2,
**dadurch gekennzeichnet**, daß
- das metallische Profil (5) als ein Faltprofil ausgebildet ist, dessen einer Schenkel (9) vorzugsweise eben gehalten ist und dessen anderer Schenkel Profilrinnen (11 und 12) aufweist, die mit dem ebenen Schenkel (9) mit dem sie in den aneinanderliegenden Bereichen (13 und 14) durch Punktschweißen (6) oder dergleichen miteinander verbunden sind, Hohlprofile bilden.

4. Profil nach einem der Ansprüche 1 bis 3,
**dadurch gekennzeichnet**, daß
- die Rinnenprofile (11 und 12) unmittelbar aneinanderliegend gefaltet sind, so daß sich im Endzustand ein M- oder W-förmiger Querschnitt für das Profil ergibt.

## Claims

1. A metallic section as reinforcement for a motor vehicle door which can be fixed to the vehicle door (at 3) by both ends, at least one end having a flat bearing surface and an open cross-section along an axially extending flat slope (15 or 16) and being brought to the finished length for installation by obliquely forming to length a continuous starting material made by section rolling
characterised in that
- it is made by cold rolling steel sheet (8) having a corrosion resistant coating on at least one side and
- it is brought to the length for installation by forming it obliquely to length by crop cutting or laser beam cutting by a flat or angled oblique cut (15 or 16).

2. A metallic section according to claim 1,
characterised in that
- the oblique forming to length is effected by an angled oblique cut (16), whereby a fixing tongue (17) is formed.

3. A metallic section according to claim 1 or claim 2,
characterised in that
- the metallic section (5) is formed as a folded section of which one limb (9) is preferably kept flat while the other limb has channel sections (11 and 12) which, together with the flat limb (9), to which they are joined in the adjacent regions (13 and 14) by spot welding (6) or the like, form hollow sections.

4. A section according to one of claims 1 to 3,
characterised in that
- the channel sections (11 and 12) are folded so as to be directly adjacent to one another, so that in the final state the section has an M- or W-shaped cross-section.

## Revendications

1. Profilé métallique servant de renfort pour une porte de véhicule automobile, qui peut être fixé par les deux extrémités (en 3) à la porte de véhicule et dont au moins une extrémité présente une portion d'application à surface plane et une section ouverte le long d'un biseau plat (15 ou 16) s'étendant axialement, profilé qui est produit par laminage avec mise en forme d'une matière première en continu, et est amené à la longueur d'incorporation finie par une coupe en longueur effectuée en biais, caractérisé en ce que
- il est produit par laminage à froid de tôle d'acier (8) dont au moins un côté est pourvu d'un revêtement anticorrosion et
- il est amené à la longueur d'incorporation par une coupe à longueur en biais, effectuée par tronçonnage ou par coupe au rayon laser, qui correspond à une coupe oblique plane ou formant un angle en elle-même (15 ou 16).

2. Profilé métallique selon la revendication 1, caractérisé en ce que
- la coupe à longueur en biais s'effectue par une coupe oblique (16) formant un angle en elle-même et réalisée de manière qu'une patte de fixation (17) soit créée.

3. Profilé métallique selon la revendication 1 ou 2, caractérisé en ce que
- le profilé métallique (5) est constitué par un profilé plié dont une branche (9) est de préférence maintenue plane et dont l'autre branche présente des gouttières (11 et 12) qui, ensemble avec la branche (9) plane, à laquelle elles sont reliées par soudage par points (6) ou analogue dans les zones (13 et 14) appliquées l'une contre l'autre, forment des profilés creux.

4. Profilé selon une des revendications 1 à 3, caractérisé en ce que
- les gouttières (11 et 12) sont pliées de manière qu'elles se raccordent directement l'une à l'autre, de sorte que le profilé présente à l'état final une section droite en forme de M ou de W.
